(19) Europäisches Patentamt — European Patent Office — Office européen des brevets

(11) **EP 1 831 107 B1**

(12) **EUROPÄISCHE PATENTSCHRIFT**

(45) Veröffentlichungstag und Bekanntmachung des Hinweises auf die Patenterteilung:
**27.06.2018 Patentblatt 2018/26**

(21) Anmeldenummer: **05815590.4**

(22) Anmeldetag: **13.12.2005**

(51) Int Cl.:
*C01G 25/00* (2006.01)       *C04B 35/491* (2006.01)
*B82Y 30/00* (2011.01)       *C04B 35/626* (2006.01)

(86) Internationale Anmeldenummer:
**PCT/EP2005/013341**

(87) Internationale Veröffentlichungsnummer:
**WO 2006/063784 (22.06.2006 Gazette 2006/25)**

(54) **FEINTEILIGE BLEIZIRKONATTITANATE UND ZIRKONIUMTITANATE UND VERFAHREN ZU DEREN HERSTELLUNG UNTER VERWENDUNG VON TITANOXIDHYDRATPARTIKELN**

FINE LEAD-ZIRKONIUM-TITANATES AND ZIRCONIUM-TITANATES AND METHOD OF PRODUCTION USING TITANIUMDIOXIDE HYDRATE PARTICLES WITH A SPECIFIC SURFACE >50 M^2/G

PARTICULES FINES DE TITANATES DE ZIRCONIUM ET DE PLOMB-ZIRKONIUM ET PROCÉDÉ DE PRÉPARATION UTILISANT DES PARTICULES D'HYDRATE D'OXYDE DE TITANIUM AYANT UNE SURFACE > 50M^2/G

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.12.2004 EP 04029439**

(43) Veröffentlichungstag der Anmeldung:
**12.09.2007 Patentblatt 2007/37**

(73) Patentinhaber: **Sachtleben Pigment GmbH**
**47829 Krefeld (DE)**

(72) Erfinder:
• **AUER, Gerhard**
  **47800 Krefeld (DE)**
• **GÜNNEL, Horst**
  **47906 Kempen (DE)**
• **Hipler Frank**
  **41339 DORTMUND (DE)**
• **HOFFMANN, Michael J.**
  **76199 KARLSRUHE (DE)**
• **WAGNER, Susanne**
  **76227 KARLSRUHE (DE)**
• **KUNGL, Hans**
  **69118 HEIDELBERG (DE)**

(74) Vertreter: **Nobbe, Matthias et al**
**Demski & Nobbe**
**Patentanwälte**
**Mülheimer Strasse 210**
**47057 Duisburg (DE)**

(56) Entgegenhaltungen:
**WO-A-02/062724       US-A1- 2002 135 971**

• **PATENT ABSTRACTS OF JAPAN Bd. 013, Nr. 182 (C-591), 27. April 1989 (1989-04-27) & JP 01 009819 A (NATL INST FOR RES IN INORG MATER; others: 02), 13. Januar 1989 (1989-01-13)**
• **DATABASE CA [Online] CHEMICAL ABSTRACTS SERVICE, COLUMBUS, OHIO, US; SHIRASAKI, SHINICHI ET AL: "Manufacture of modified zirconium powder for dielectric ceramic" XP002336905 gefunden im STN Database accession no. 110:224087 & JP 01 009818 A2 (NATIONAL INSTITUTE FOR RESEARCH IN INORGANIC MATERIALS, JAPAN; RESEARC) 13. Januar 1989 (1989-01-13)**
• **PATENT ABSTRACTS OF JAPAN Bd. 018, Nr. 456 (C-1242), 25. August 1994 (1994-08-25) & JP 06 144835 A (OSAKA CEMENT CO LTD), 24. Mai 1994 (1994-05-24)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 831 107 B1

- M. OLEDZKA, M. LENCKA, P. PINCELOUP, K. MIKULKA-BOLEN, L. MCCANDLISH, R. RIMAN: "Influence of Precursor on Mikrostructure and Phase Composition of Epitaxial Hydrothermal $PbZr0.7Ti0.3O3$ Films" CHEM. MATER, Bd. 15, 2003, Seiten 1090-1098, XP002369626

**Beschreibung**

Die Erfindung betrifft ein Verfahren zur Herstellung von Zirkoniumtitanaten, ein Verfahren zur Herstellung von Bleizirkonattitanaten, eine Zubereitung enthaltend Titanoxidhydratpartikel und eine Zirkoniumverbindung, Zirkoniumtitanat, Bleizirkonattitanat, ein mikroelektronisches Bauelement, das Bleizirkonattitanat enthält, sowie ein Verfahren eines solchen mikroelektronischen Bauelementes.

**Stand der Technik:**

Bleizirkonattitanat (PZT) zeigt ein ferroelektrisches Materialverhalten. PZT-Keramiken werden deshalb vielfach in elektromechanischen Bauteilen eingesetzt, beispielsweise in sogenannten Sensoren zur Messung oder Registrierung von mechanischen Kräften bzw. Schwingungen oder als Aktuator zur Erzeugung von mechanischen Wirkungen durch elektrische Ansteuerung.

PZT-Pulver wird in der Regel aus dem Rohmaterialien Bleioxid, Zirkoniumdioxid und Titandioxid hergestellt. Für gängige PZT-Keramikmaterialen lässt sich die Zusammensetzung formelmäßig als $Pb(Zr_xTi_{1-X})O_3$ mit $0<x<1$ angeben. Weiterhin sind üblicherweise gewisse Mengen an Dotierelementen enthalten (insgesamt meist ca. 1-3%). Typische Dotierelemente sind Lanthan, Neodym, Strontium, Kalium, Eisen, Gadolinium und Niob.

Ausgangsmaterial für derartige PZT-Keramiken sind kalzinierte PZT-Mischoxidpulver, die zu Formkörpern verpresst oder zu Beschichtungen oder Folien verarbeitet und dann zu Keramik gesintert werden. Bleizirkonattitanat-Mischoxidpulver können durch Synthesemethoden, die über Festkörperreaktionen (Mischoxid-Verfahren) ablaufen, und durch nasschemische Methoden (z.B. Sol-Gel-Prozess, Kopräzipitationsverfahren oder Sprühreaktionsverfahren) hergestellt werden.

Die Sinterfähigkeit bzw. Sintertemperatur der Pulver ist nicht nur abhängig von der Zusammensetzung, sondern auch von der Vorgeschichte des jeweiligen Materials, also vom Aktivierungsgrad, von der Partikelgröße und der Partikelgrößenverteilung, der Partikelform sowie der Dichte der Grünkörper (d.h. nach Formgebung und vor der Sinterung).

Die Kalzinierung der Ausgangspulver (Mischkristallbildung) wird bei den nach den herkömmlichen Verfahren hergestellten Pulvern bei relativ hohen Reaktionstemperaturen durchgeführt, um nahezu phasenreine PZT-Mischkristalle zu erhalten. Die Kalzinierungstemperaturen verringern jedoch die Sinteraktivität der PZT-Mischkristalle.

Zur Herstellung einer PZT-Keramik mit einer relativen Dichte von ca. 98% aus diesen Pulvern müssen deshalb häufig relativ hohe Sintertemperaturen eingesetzt werden.

Die Reaktionstemperaturen (Kalzinierungstemperaturen) liegen bei Verwendung oxidischer Reaktanden bei etwa 800-900°C, bei Verwendung von Reaktanden, welche nach dem Sol-Gel-Verfahren hergestellt werden im Bereich von 450 bis 700°C. Die entsprechenden Sintertemperaturen betragen etwa 1100-1250°C (oxidische Reaktanden) bzw. <1000°C (Reaktanden aus Sol-Gel-Verfahren). Bei Temperaturen von deutlich über 1000°C verdampfen jedoch merkliche Mengen an Bleioxid, weshalb Vorkehrungen zur Vermeidung von Bleiverlusten und damit der Störung der Stöchiometrie getroffen werden müssen. Des weiteren verwendet man als Elektrodenmaterial für ferroelektrische Keramiken, wie z.B. Vielschicht-Piezoaktoren, üblicherweise Ag/Pd (70/30), so dass die Sintertemperatur durch den Schmelzpunkt dieser Legierung begrenzt ist (Ts=1165°C). Höhere Sintertemperaturen als 1150°C erfordern daher einen entsprechend höheren Anteil des höherschmelzenden, aber kostenintensiveren Palladiums. Die Vielschicht-Piezoaktoren bestehen aus stapelweise angeordneten ferroelektrischen Keramikschichten mit einer Schichtdicke von jeweils 10 bis 200 $\mu$m. Zwischen jeder Keramikschicht befindet sich eine ca. 1-3 $\mu$m dicke Metallelektrode, die zur Ansteuerung des Aktors dient. Diese Vielschicht-Piezoaktoren besitzen idealerweise hohe Curietemperaturen, so dass auch Anwendungen bei höheren Temperaturen möglich sind. Außerdem zeichnen sie sich durch piezoelektrische und elektromechanische Kennwerte und Ermüdungsbeständigkeit aus.

WO02062724A2 offenbart ein Verfahren zur Herstellung von Blei-Zirkon-Titanaten (PZT) durch Vermischen von Bleioxid-, Zirkoniumoxide- und Titandioxidpulvern und durch eine sich anschließenden thermische Behandlung des Oxidgemischpulvers.

Patent Abstracts of Japan Bd. 013, Nr. 182 (C-591) & JP 01 009819A beschreiben ein Verfahren zur Herstellung von Zirkontitanaten durch Umsetzung einer $TiO_2$-Suspension mit einer Lösung von ZrOCI und anschließender Zugabe von Ammoniak.

Database CA [online] Chemical Abstracts Service, Columbus, Ohio, US; Shirasaki, Shinichi et al: "Manufacture of modified zirconium powder for dielectric ceramic" offenbart ein Verfahren zur Herstellung einer Verbindung Pb $[Zr_{0,5}Ti_{0,5}O_3]$ (Zr/Ti=1) Pb/(Zr+Ti)=1 bei dem eine Zirkonverbindung, Titandioxid und eine Bleiverbindung umgesetzt werden. Die so erhaltene keramische Verbindung hat hohe dielektrische Konstanten und zeigt geringe dielektrische Verluste. Weiterhin ist ein Verfahren offenbart, bei dem in wässriger Lösung enthaltenes basisches Zirkoncarbonat und $TiCl_4$ mit $NH_4OH$ umgesetzt wird, um durch Nachkalzinieren ein Zirkoniumtitantat $Ti_{(0,2)}Zr_{(0,8)}O_2$ - Pulver herzustellen. Dieses Zirkontitanatpulver wird dann mit Titandioxid und Bleioxid vermischt, um ein $Pb(Zr_{0,5}Ti_{0,5})O_3$-Pulver zu enthalten.

US 2002/0135971 A offenbart ein Titanoxid-Pulver umfassend Titanoxidpartikel mit einer amorphen Bariumverbindung auf der Oberfläche sowie ein Verfahren zur Herstellung derartiger Partikel.

M. Oledzka et al., Chem. Mater 2003, 15, 1090-1098 offenbart hydratisierte Zirkoiumtitante, die durch die Hydrolyse von organischen Titan- und Zirkoniumprecursoren hergestellt wurden. Zudem wird die Herstellung eines PZT durch Umsetzen eines *Spherical Amorphous Precursors* (SAP) und *Nanostructured Amorphous Precursors* (NAP) mit Blei (iV)acetat offenbart.

Chemical Processing of Ceramics, 2nd. Ed., Edited by B. Lee and S. Kumaneni, Taylor and Francis, 2005 offenbart dass ein hoher Chloridgehalt für die elektronischen Eigenschaften des Zirkoniumtitanats bzw. Bleizirkonattitants nachteilig ist.

N.S. Gejbhiye, P.K. Pandey, L. George, A. Kumar, J. Nanosci, Nanotechnol. 2007, 7(6), 1975-1979 offenbart, dass das Bleizirkonattitanat bei Verwendung von TiCl4 als Titanquelle zwangsläufig Chlorid als Verunreinigung enthält.

## Zusammenfassung der Erfindung:

Der vorliegenden Erfindung liegt die Aufgabe zu Grunde, feinteilige, sinteraktive, gut verarbeitete und wirtschaftlich herstellbare Bleizirkonattitanate, Zirkontitanhydrate sowie Zirkoniumtitanate als Vorstufen für Bleizirkonattitanate herzustellen, aus denen PZT-Keramiken hergestellt werden können, die bei niedrigen Sintertemperaturen gut verdichten. Außerdem soll ein Verfahren zu deren Herstellung unter Verwendung einfacher titanhaltiger Substrate bereitgestellt werden, wobei ein einfaches und wirtschaftliches Herstellverfahren Verwendung findet.

Die Aufgabe wird erfindungsgemäß zum einen gelöst durch Verfahren zur Herstellung von Zirkoniumtitanaten, Zirkontitanhydraten bzw. Bleizirkonattitanaten durch Umsetzung von feinteiligen Titandioxidpartikeln mit einer spezifischen Oberfläche von mehr als 200 $m^2/g$ mit einer Zirkoniumverbindung bzw. einer Blei- und Zirkoniumverbindung.

Die Aufgabe wird ferner gelöst durch die Bereitstellung von Zirkontitanhydraten, Zirkoniumtitanaten und Bleizirkonattitanaten, welche durch die erfindungsgemäßen Verfahren herstellbar sind.

Die Erfindung umfasst zudem die Bereitstellung eines mikroelektronischen Bauelementes, insbesondere eines Vielschicht-Aktors, hergestellt mit Hilfe eines erfindungsgemäßen Bleizirkonattitanat-Materials.

## Genaue Beschreibung der Erfindung:

Die Titandioxidpartikel

Die erfindungsgemäß verwendeten feinteiligen Titandioxidpartikel weisen eine BET-Oberfläche von mehr als 200 $m^2/g$, vorzugsweise weniger als 450 $m^2/g$, besonders bevorzugt mehr als 200 bis 380 $m^2/g$, insbesondere bevorzugt 250 bis 350 $m^2/g$, auf. Die Bestimmung der BET-Oberfläche erfolgt dabei nach DIN ISO 9277 mittels $N_2$ bei 77 K an einer bei 140°C während 1 Stunde entgasten und getrockneten Probe aus den Titandioxidpartikeln. Die Auswertung erfolgt über Mehrpunktbestimmung (10-Punkt-Bestimmung).

Die erfindungsgemäß verwendeten Titandioxidpartikel sind regelmäßig Titanoxidhydratpartikel, d.h. die Partikel enthalten chemisorbiertes Wasser und gegebenenfalls $SO_4$ und/oder weitere anorganische und/oder organische Bestandteile.

Vorzugsweise enthalten die Titandioxidpartikel 0,4 bis 25 Gew.-%, besonders bevorzugt 2 bis 10 Gew.-%, Wasser.

Der $SO_4$-Gehalt der Titandioxidpartikel beträgt vorzugsweise weniger als 1 Gew.-%, besonders bevorzugt zwischen 0,01 bis 0,4 Gew.-%, insbesondere bevorzugt zwischen 0,01 bis 0,08 Gew.-%, bezogen auf $TO_2$.

Die angegebenen und alle nachfolgend aufgeführten Gewichtsprozentangaben der Inhaltsstoffe des Titandioxids beziehen sich auf eine nach ISO 787 Teil 2 getrocknete Probe.

Die Bestimmung des $H_2O$-Gehalts der Titandioxidpartikel kann nach folgender Gleichung erfolgen:

$$H_2O - \text{Gehalt } (\%) = \text{Glühverlust } ( \% ) - H_2SO_4 - \text{Gehalt } (\%)$$

Hierbei ist der Glühverlust der Gewichtsverlust einer nach ISO 787 Teil 2 getrockneten Probe nach einstündigem Glühen bei einer Temperatur von 1000°C. Der $SO_4$-Gehalt wird auf Grundlage der analytischen Bestimmung des Schwefelgehalts der nach ISO 787 Teil 2 getrockneten Probe ermittelt.

Die Bestimmung des Schwefelgehalts erfolgt durch Verbrennung und gaschromatographische Detektion der Verbrennungsgase mittels Wärmeleitfähigkeitsdetektion (WLD).

Näherungsweise kann der $H_2O$-Gehalt der Titandioxidpartikel auch mit dem Glühverlust nach einstündigem Glühen der nach ISO 787 Teil 2 getrockneten Probe bei 500°C gleichgesetzt werden.

Eine exakte Bestimmung des $H_2O$-Gehalts der Titandioxidpartikel kann beispielsweise durch gaschromatographische Analyse der flüchtigen Bestandteile erfolgen, welche nach einstündigem Glühen bei einer Temperatur von 1000°C einer nach ISO 787 Teil 2 getrockneten Probe entstehen.

Der Halogenidgehalt der erfindungsgemäß verwendeten Titandioxidpartikel beträgt vorzugsweise weniger als 1000 ppm, besonders bevorzugt weniger als 500 ppm, insbesondere bevorzugt weniger als 50 ppm, bezogen auf $TO_2$. Insbesondere beträgt der Chloridgehalt der Partikel vorzugsweise weniger als 20 ppm, bezogen auf $TO_2$.

Der Gehalt an Niob der Titandioxidpartikel kann 10 bis 2000 ppm, bevorzugt 30 bis 500 ppm, besonders bevorzugt 50 bis 300 ppm, insbesondere 50 bis 120 ppm, bezogen auf $TiO2$, betragen.

Der Gehalt an Natrium und/oder Kalium der erfindungsgemäß verwendeten Titandioxidpartikel beträgt vorzugsweise weniger als 200 ppm, besonders bevorzugt weniger als 50 ppm, bezogen auf $TO_2$.

Der Gehalt an Eisen der erfindungsgemäß verwendeten Titandioxidpartikel beträgt vorzugsweise weniger als 100 ppm, besonders bevorzugt weniger als 10 ppm, bezogen auf $TO2$. Die erfindungsgemäß verwendeten Titanoxidhydratpartikel können durch Hydrolyse anorganischer oder organischer Titanverbindungen erhalten werden. Je nach Titanverbindung und Reaktionsbedingungen ergeben sich dabei unterschiedliche Eigenschaften der erhaltenen Titandioxide.

Durch Hydrolyse von Titanylsulfatlösung lassen sich die erfindungsgemäß verwendeten Titanoxidhydratpartikel in guter Qualität und kostengünstig herstellen. Die Titanoxidhydratpartikel können jedoch auch aus Titantetrachlorid oder Titanalkoxid hergestellt werden.

Bei Titanoxidhydrat, welches durch Hydrolyse von Titanylsulfatlösung erhalten wird, liegt eine besonders vorteilhafte Kombination von Eigenschaften vor, nämlich eine hohe spezifische Oberfläche und eine mikrokristalline Anatasstruktur. Diese Anatasstruktur kann aufgrund der breiten Reflexe des Röntgendiffraktogramms (s. Abb. 1) als mikrokristallines Material identifiziert werden.

Vorzugsweise enthalten die erfindungsgemäß verwendeten Partikel daher weniger als 10 Gew.-%, besonders bevorzugt weniger als 1 Gew.-%, Rutil, bezogen auf $TO_2$. Besonders bevorzugt sind Titandioxidpartikel, die im Röntgendiffraktogramm deutlich eine Anatas-Struktur zeigen.

Die Titanoxidhydratpartikel können beispielsweise durch Hydrolyse einer schwefelsäurehaltigen Titanylsulfatlösung erhalten werden. Je nach Herkunft und Zusammensetzung der schwefelsäurehaltigen Titanylsulfatlösung wird bei der Hydrolyse eine schwefelsaure Suspension von Titanoxidhydrat erhalten, welche noch unerwünschte Verunreinigungen, insbesondere Schwermetalle, enthalten kann. In der Regel werden deshalb ein oder mehrere Reinigungsschritte vorgenommen, um das Titanoxidhydrat von unerwünschten Verunreinigungen zu befreien.

Bevorzugt werden Titanoxidhydratpartikel verwendet, die durch Hydrolyse von Titanylsulfat entstehen, welches beim Herstellungsverfahren für Titandioxid nach dem Sulfatverfahren anfällt. Dieses Verfahren wird beispielsweise in Industrial Inorganic Pigments, 3. Edition, Editors Gunter Buxbaum, Gerhard Pfaff, Wiley-VCH, 2005, beschrieben.

Besonders bevorzugt wird dabei das nach der Hydrolyse erhaltene Titanoxidhydrat von anhaftenden Verunreinigungen befreit, indem es filtriert und gewaschen und gegebenenfalls noch zusätzlich dem Verfahrensschritt der so genannten Bleiche, einer chemischen Behandlung mit Reduktionsmitteln zur Eliminierung von 3-wertigem Eisen, unterzogen wird.

Die großtechnische Herstellung von Titanoxidhydrat auf Grundlage des Sulfatverfahrens für die Titandioxidherstellung hat weiterhin den Vorteil einer konstanten Produktqualität und ständigen Verfügbarkeit.

Um eine besonders hohe Reinheit zu erhalten, ist es vorteilhaft, nicht die großtechnische metallionenhaltige schwefelsäurehaltige Titanylsulfatlösung zu verwenden, sondern eine synthetische schwefelsäurehaltige Titanylsulfatlösung, welche nur geringe Mengen an Verunreinigungen enthält. Eine solche Titanylsulfatlösung kann beispielsweise durch Hydrolyse von hochreinem $TiCl_4$ oder Titanestern und Lösen des erhaltenen Präzipitats mit Schwefelsäure hergestellt werden. Die Herstellung eines hochreinen Titanoxidhydrats daraus kann entweder analog zu herkömmlichen großtechnischen Prozessen oder mit spezifischen Abweichungen erfolgen.

Bevorzugt wird die anhaftende Schwefelsäure durch Umsetzung mit einer Base (z.B. NaOH, KOH, $NH_3$) und anschließendes Auswaschen des entstandenen Sulfats entfernt.

Gegebenenfalls kann eine nachfolgende Eliminierung der durch die Umsetzung mit der Base eingebrachten Kationen durch Umsetzung mit thermisch leicht zersetzbaren Säuren (z.B. Carbonsäuren oder Salpetersäure) und anschließendes Auswaschen bewerkstelligt werden.

Je nach gewünschter Reinheit können die oben beschriebenen Umsetzungen mehrfach wiederholt werden.

Besonders vorteilhaft bei dem aus Titanylsulfat erhaltenen Titanoxidhydrat sind seine hohe Reinheit bezüglich Eisen und anderer Schwermetalle sowie seine extrem geringen Gehalte an Chlorid.

Es kann vorteilhaft sein, die Titandioxidpartikel durch einen Kalzinier- oder Temperschritt zu behandeln, um die Teilchengröße und Reaktivität gezielt zu modifizieren. Insbesondere kann die Umwandlung von mikrokristallinem Titanoxidhydrat in etwas größere Anatas-Kristallite vorteilhaft sein. Dabei sollte der Kalzinier- oder Temperschritt jedoch so durchgeführt werden, dass die besonderen Eigenschaften des Titanoxidhydrats nicht verloren gehen, d.h. der Anteil an chemisorbiertem Wasser (z.B. in Form von Hydroxylgruppen) sollte nicht kleiner als 0,4 Gew.-%, bevorzugt 2,0 Gew.-%, werden, um eine möglichst reaktive Oberfläche des Titanoxidhydrats beizubehalten.

Bei mit hohen Temperaturen kalziniertem Titanoxidhydrat geht die Reaktivität deutlich zurück, während sich das Titanoxidhydrat zu makrokristallinem $TiO_2$ mit einer Kristallgröße von größer als 100 nm in der Anatas- oder Rutilmodifikation mit einem Gehalt an chemisorbiertem Wasser von kleiner als 0,4 Gew.-% umwandelt. Außerdem wird - wie oben bereits erwähnt - durch gröbere titanhaltige Partikel die Ausbildung eines gröberen Zirkoniumtitanat bzw. Bleizirkonattitanats induziert.

Erfindungsgemäß werden bevorzugt Titanoxidhydratpartikel verwendet, die nach einstündigem Glühen einer nach ISO 787 Teil 2 vorgetrockneten Probe bei einer Temperatur von 1000°C einen Glühverlust von mehr als 2 Gew.-%, bevorzugt mehr als 6 Gew.-% und/oder die nach einstündigem Glühen bei 500°C einen Glühverlust von mehr als 0,8 Gew.-%, bevorzugt mehr als 1,2 Gew.-%, aufweisen.

Durch die beschriebenen erfindungsgemäßen Verfahrensschritte, durch die im Vergleich zu herkömmlichen Gasphasenprozessen ein technisch und wirtschaftlich verbesserter Produktionsprozess zur Bildung nanopartikulärer titanoxidhydrathaltiger Materialien zur Verfügung gestellt wird, werden Primärpartikel des Titanoxidhydrats mit einer mittleren Teilchengröße von 3 bis 15 nm, bevorzugt 4 bis 8 nm, erhalten.

Die Primärpartikel sind kleine, näherungsweise kugelförmige, mikrokristalline Partikel mit einer gittergestörten Anatasstruktur. Die Teilchengröße kann durch Berechnung aus der BET-Oberfläche unter Annahme einer monomodalen Korngrößenverteilung von kugelförmigen Partikeln ermittelt werden. Die Beziehung zwischen der mittleren Teilchengröße d und der spezifischen Oberfläche $S_{BET}$ (ermittelt nach BET) ist unter der Voraussetzung einer monomodalen Korngrößenverteilung und kugelförmigen Partikeln durch die Gleichung

$$d_{Partikel} = \frac{6}{\rho \cdot S_{BET}}$$

mit SBET in $m^2/g$, $\rho$ = Dichte des Partikels in $g/cm^3$, d in $\mu m$ gegeben. Die verwendeten Dichten sind: 3,90 $g/cm^3$ (für $TiO_2$ als Titanoxidhydrat oder Anatas), 4,26 $g/cm^3$ (für $TiO_2$ als Rutil).

Es wurde überraschend gefunden, dass die erfindungsgemäß verwendeten Titandioxidpartikel in Kombination mit Zirkonverbindungen, insbesondere mit feinteiligen hydroixidischen Zirkonverbindungen, bezüglich ihrer Eignung zur Herstellung von Zirkoniumtitanaten bzw. Bleizirkonattitanaten deutliche Vorteile gegenüber herkömmlichem Titandioxid, wie z.B. handelsübliche technische Titandioxide mit mittleren Teilchengrößen von rund 200 nm, aufweisen. So werden vermutlich aufgrund der hohen spezifischen Oberfläche, der geringen Partikelgröße von Titanoxidhydrat und der hohen Reaktivität bei der Umsetzung mit einer Zirkoniumverbindung, insbesondere mit feinteiligen hydroxidischen Zirkonverbindungen, bzw. einer Bleiverbindung und einer feinteiligen hydroxidischen Zirkoniumverbindung bzw. einer Bleiverbindung und einer feinteiligen hydroxidischen Zirkoniumverbindung, besonders feinteilige und sinteraktive Zirkoniumtitanate bzw. Bleizirkonattitanate erhalten.

Außerdem wirkt sich der geringe Chloridgehalt der erfindungsgemäßen Titanoxidhydratpartikel positiv auf die Eigenschaften der Zirkoniumtitanate bzw. Bleizirkonattitanate aus. Der geringe Gehalt an Chlorid und metallischen Spurenelementen wirkt sich günstig auf die Eigenschaften der aus Titanoxidhydrat hergestellten Zirkoniumtitanate bzw. Bleizirkonattitanate aus. Insbesondere bei niedrigen Umsetzungstemperaturen zu Zirkoniumtitanat bzw. Bleizirkonattitanat ist die Anwesenheit von Halogeniden störend.

Die Zirkonium- und Bleiverbindungen

Die Titandioxidpartikel werden erfindungsgemäß mit einer oder mehreren Zirkoniumverbindungen bzw. Blei- und Zirkoniumverbindungen umgesetzt. Hierbei handelt es sich in der Regel um Oxide oder Salze des Bleis bzw. Zirkoniums. Die Salze umfassen Acetate, Carbonate, Oxalate, Hydroxide, Oxidchloride, Oxidsulfate, Nitrate, Halogenide wie Chloride, wie auch organische Verbindungen wie Alkoxide und Salze von Carbonsäuren.

Besonders bevorzugt sind feinteilige oxidische oder wasserlösliche Zirkonium- und Bleiverbindungen. Als Zirkoniumverbindungen werden besonders bevorzugt Zirkoniumoxid ($ZrO_2$), Zirkonylchlorid ($ZrOCl_2$) und Zirkonylsulfat ($ZrOSO_4$) verwendet. Unter den Bleiverbindungen sind Bleioxid (PbO), Bleinitrat ($Pb(NO_3)_2$), Bleiacetat ($Pb(OAc)_2$) sowie andere leicht zersetzliche Bleiverbindungen bzw. Mischungen hiervon besonders bevorzugt.

Die Zersetzungstemperaturen können z.B. in kombinierten Thermogravimetrie (TG)- und Differenzthermoanalyse (DTA)-Apparaturen ermittelt werden. Besonders vorteilhaft erweist sich die Verwendung von Zirkoniumverbindungen, die in Form eines Fällungsprodukts mit einer BET-Oberfläche von mehr als 20 $m^2/g$, bevorzugt mehr als 50 $m^2/g$, besonders bevorzugt mehr als 100 $m^2/g$, verwendet werden, das durch Neutralisation einer wässrigen Zirkoniumsalzlösung erhalten wird. Vorzugsweise wird das Fällungsprodukt auf den Titandioxidpartikeln aufgefällt.

Die Bestimmung der BET-Oberfläche erfolgt, analog zu der der Titandioxidpartikel, nach DIN ISO 9277 mittels $N_2$ bei 77 K an einer bei 140°C während 1 Std. entgasten und getrockneten Probe des Fällungsprodukts.

Ein solches Fällungsprodukt kann eine oder mehrere der Verbindungen Zirkoniumhydroxid, Zirkoniumoxyhydroxid oder Zirkoniumoxid enthalten.

Zur Reaktionsführung

Die vorstehend charakterisierten Titandioxidhydratpartikel werden erfindungsgemäß in einem Verfahren zur Herstellung von Zirkoniumtitanaten bzw. Bleizirkonattitanaten mit den vorstehend genannten Zirkoniumverbindungen bzw. Blei- und Zirkoniumverbindungen verwendet.

Somit umfasst die Erfindung ein Verfahren zur Herstellung von Zirkoniumtitanaten, wobei Zirkoniumverbindungen mit Titandioxidpartikeln mit einer BET-Oberfläche von mehr als 200 m$^2$/g umgesetzt werden, wobei entweder

a) die Titandioxidpartikel mit Zirkoniumoxid bzw. Zirkoniumhydroxid trocken gemahlen und anschließend kalziniert oder teilkalziniert werden, oder

b) die Titandioxidpartikel in einer zirkoniumhaltigen Lösung oder zusammen mit einem wasserlöslichen Zirkoniumsalz in Wasser suspendiert werden, die Suspension dann neutralisiert, getrocknet und anschließend kalziniert wird.

Die Erfindung umfasst des Weiteren ein Verfahren zur Herstellung von Bleizirkonattitanaten, wobei Blei- und Zirkoniumverbindungen mit Titandioxidpartikeln mit einer BET-Oberfläche von mehr als 200 m$^2$/g umgesetzt werden, wobei entweder

a) die Titandioxidpartikel mit Zirkoniumoxid bzw. Zirkoniumhydroxid und einer Bleiverbindung trocken gemahlen und anschließend kalziniert oder teilkalziniert werden, oder

b) die Titandioxidpartikel in einer zirkoniumhaltigen Lösung oder zusammen mit einem wasserlöslichen Zirkoniumsalz in Wasser suspendiert werden, die Suspension dann neutralisiert und getrocknet wird und dann zusammen mit einer Bleiverbindung kalziniert wird.

Zur Herstellung von Zirkoniumtitanaten können die Titandioxidpartikel und Zirkoniumoxid bzw. Zirkoniumhydroxid gemeinsam trocken gemahlen und anschließend kalziniert oder teilkalziniert werden. Entsprechend können Bleizirkonattitanate durch gemeinsames Mahlen von Titandioxidpartikeln, Zirkoniumoxid bzw. Zirkoniumhydroxid gemeinsam trocken gemahlen und anschließend kalziniert oder teilkalziniert werden. Entsprechend können Bleizirkonattitanate durch gemeinsames Mahlen von Titandioxidpartikeln, Zirkoniumoxid bzw. Zirkoniumhydroxid und einer Bleiverbindung, z.B. Bleioxid, Bleinitrat oder Bleiacetat, hergestellt werden. Auch hier schließt eine Kalzinierung oder Teilkalzinierung an.

Alternativ können die Titandioxidpartikel auch mit einer wasserlöslichen Zirkoniumverbindung (z.B. Zirkonylchlorid oder Zirkonylsulfat) umgesetzt werden, wobei die Partikel in der bereits hergestellten Zr-haltigen bzw. Zr- und Pb-haltigen Lösung oder zusammen mit dem Zr-Salz bzw. Zr- und Pb-Salz in Wasser suspendiert werden. Die Reaktion erfolgt durch die Neutralisation der Suspension, z.B. durch Zugabe von Ammoniak oder Natriumhydroxid, wobei die Zirkoniumverbindung in Form von oxidischen und/oder hydroxidischen Verbindungen ausfällt. Vorzugsweise wird die Neutralisation bis zu einem pH-Wert von 7 bis 8 vorgenommen.

Die auf diese Weise erhaltene Mischung kann durch Filtration abgetrennt und gegebenenfalls anschließend gewaschen und getrocknet werden, so dass ein pulverförmiges Material bestehend aus Titandioxid und ausgefällten Oxiden und/oder Hydroxiden des Zirkoniums bzw. bestehend aus Titandioxid und ausgefällten Oxiden und/oder Hydroxiden des Zirkoniums und des Bleis vorliegt.

Die erhaltene Mischung kann entweder vor der Trocknung einer Nassmahlung, bevorzugt einer Perlmahlung, oder nach der Trocknung einer Trockenmahlung unterzogen werden, wodurch die Kalzinier- bzw. Sinteraktivität noch weiter verbessert werden kann.

Nach der Abtrennung und Reinigung des Produkts durch Filtration und Waschen, wird das chlorid- bzw. sulfatarme Produkt getrocknet. An die Trocknung schließt sich eine Kalzinierung oder Teilkalzinierung bei einer Temperatur von vorzugsweise maximal 650°C, bevorzugt maximal 600°C an. Besonders bevorzugt erfolgt die Kalzinierung oder Teilkalzinierung bei einer Temperatur unterhalb von 400°C. Führt man die Reaktion in Gegenwart einer Bleiverbindung und/oder anderen Dotierungsverbindungen wie z. B. Lanthan- oder Niobverbindungen durch, so erhält man nach der Kalzinierung entsprechend dotiertes oder nicht-dotiertes Bleizirkonattitanat.

Die Herstellung der Bleizirkonattitanate kann aber auch zweistufig verlaufen, wobei in einer ersten Stufe die Zirkoniumtitanate auf eine der oben beschriebenen Wege hergestellt werden und diese dann in einer zweiten Stufe mit einer Bleiverbindung in einem flüssigen Medium gemahlen werden. Auch in diesem Fall schließt sich an die Trocknung eine Kalzinierung bei einer Temperatur von maximal 650°C, bevorzugt maximal 600°C, an.

Das Zirkoniumtitanat bzw. Bleizirkonattitanat kann auch unter hydrothermalen Bedingungen direkt durch Umsetzung der Titandioxidpartikel mit einer Zirkoniumverbindung bzw. Blei- und Zirkoniumverbindung erhalten werden.

Bei dem Verfahren zur Herstellung von Bleizirkonattitanat kann das exakte gewünschte Zr/Ti-Verhältnis durch Mischen zweier homogener Zirkontitanhydrat-Edukte mit unterschiedlichem Zr/Ti-Verhältnis eingestellt werden, wobei die Bleiverbindung und die Dotierungskomponenten dieser Mischung ebenfalls zugegeben werden. Es kann aber auch das exakte gewünschte Pb/Zr/Ti-Verhältnis durch Mischen zweier homogener Zirkontitanhydrat-Edukte mit unterschiedlichem Zr/Ti-Verhältnis sowie eines dritten Eduktes, welches neben Zirkontitanhydrat zusätzlich die Bleiverbindung enthält, eingestellt werden und die Dotierungskomponenten dieser Mischung ebenfalls zugegeben werden.

Die Kalzinierung der Titandioxidpartikel mit der Zirkoniumverbindung bzw. Blei- und Zirkoniumverbindung erfolgt vorzugsweise nicht isotherm, sondern bei näherungsweise konstanter Umwandlungsrate zum Zirkoniumtitanat bzw. Bleizirkonattitanat (SCRT-Methode, beschrieben für $BaTiO_3$ in Gotor et al., J.Europ.Cer.Soc.23 (2003), 505-513).

Im Anschluss an die Kalzinierung kann das Zirkoniumtitanat bzw. Bleizirkonattitanat durch Mahlen, z.B. Perlmahlung, weiter zerkleinert werden.

Vorzugsweise wird bei der Mahlung nach der Kalzinierung ein spezifischer Energieeintrag von maximal 80 kWh pro Tonne Feststoff, bevorzugt weniger als 30 kWh pro Tonne, verwendet.

Die Weiterverarbeitung nach der Kalzinierung kann aber auch ganz ohne einen dazwischenliegenden Mahlungsschritt erfolgen.

Nach der Kalzininierung erfolgt vorzugsweise eine Sinterung bei einer Temperatur von maximal 1050°C, besonders bevorzugt unterhalb von 950°C.

Kalzinierung und Sinterung können auch in einem einzigen Schritt in Form eines "Reaktionsinterns" erfolgen.

Bei der Sinterung wird vorzugsweise eine relative Dichte von mindestens 97%, besonders bevorzugt von mindestens 98,5% erreicht.

Die erfindungsgemäßen pulverförmigen Bleizirkonattitanate bzw. Zirkoniumtitanate sind feinteilig, wenig agglomentiert, reaktiv und weisen eine sehr homogene Verteilung der einzelnen Elemente auf.

Die Mengenverhältnisse Bleiverbindung / Zirkoniumverbindung /Titandioxidpartikel (und gegebenenfalls weiterer Dotierungselemente) werden durch exakte Einwaage eingestellt. Das molare Verhältnis Pb:Zr:Ti kann dabei entsprechend der konkreten Anwendungsanforderung des Bleizirkonattitanats bzw. Zirkoniumtitanats angepasst werden. Bei Verwendungen der erfindungsgemäßen Verbindungen kann aufgrund der niedrigen Kalzinierungstemperaturen und der geringen Agglomeration der erhaltenen PZT-Partikel der Verfahrensschritt der Mahlung nach Kalzinierung entweder ganz oder teilweise eingespart werden. Dies stellt einen erheblichen Kostenvorteil gegenüber der herkömmlichen Verfahrensweise dar.

Darüber hinaus ist es möglich, die Ausgangsmaterialien anstelle der üblichen Verfahrensführung (Kalzinierung, Mahlung, Sinterung) in einem einzigen Verfahrensschritt zur fertigen Keramik umzusetzen (Reaktionsinterung). Diese Verfahrensweise zeichnet sich durch deutliche Kostenvorteile aus.

Die Sinterung der erfindungsgemäßen Bleizirkonattitanate tritt, im Vergleich zu herkömmlichen Pulvern, eine Verdichtung bereits bei niedrigeren Temperaturen ein. Keramiken aus diesen Materialien können dadurch bei niedrigeren Sintertemperaturen hergestellt werden. Alternativ dazu können, durch das gegenüber einem herkömmlichen Pulver verbesserte Verdichtungsverhalten, bei Sintertemperaturen Keramiken mit höheren Dichten hergestellt werden.

Die Gefüge der Keramiken aus den erfindungsgemäßen Bleizirkonattitanaten sind sehr feinkörnig. Die geringen Korngrößen sind für die Herstellung von Bauteilen mit sehr geringen Abmessungen von Vorteil. Da bei kleiner Korngröße ein gegebenes Volumen eine höhere Anzahl von Körnern mit unterschiedlichen kristallographischen Orientierungen enthält, werden die durch die anisotropen Eigenschaften der Materialien bedingten lokalen Inhomogenitäten verringert. Bei geringen Korngrößen sind die Koerzitivfeldstärken hoch und die feldinduzierten Dehnungen und andere elektromechanische Eigenschaften gering. Für Anwendungen bei denen die Korngrößen von untergeordneter Bedeutung sind, kann ein Kornwachstum in mittels geeigneter Dotierung erreicht werden. Durch geeignete Kombination von Donator- und Akzeptordotierung werden bei gegebener Sintertemperatur Korngröße und elektromechanische Eigenschaften eingestellt. Elektrische und elektromechanische Eigenschaften können dadurch erhöht, die Koerzitivfeldstärken verringert werden. Maßgeblich für die Korngrößen ist der Donatorüberschuss.

Zubereitungen aus Titanoxidhvdratpartikeln und Zirkoniumverbindungen bzw. Zirkonium- und Bleiverbindungen

Die Erfindung umfasst auch eine Zubereitung, enthaltend Titanoxidhydratpartikel mit einer BET-Oberfläche von mehr als 200 m$^2$/g und eine Zirkoniumverbindung, wobei das Molverhältnis von Zirkon und Titan zwischen 0,25 und 4 liegt.

Zudem umfasst die Erfindung eine Zubereitung, enthaltend Titanoxidhydratpartikel mit einer BET-Oberfläche von mehr als 200 m$^2$/g, sowie eine gefällte oder aufgefällte Zirkoniumverbindung sowie eine Bleiverbindung, wobei das Molverhältnis von Pb, Zr und Ti so beschaffen ist, dass [Zr]/[Ti] = 0,25 bis 4, bevorzugt 1,0 bis 1,5, und [Pb]/([Zr]+[Ti]) = 0,95 bis 1,05, bevorzugt 0,95 bis 1,0, beträgt.

Die Erfindung stellt somit auch Zubereitungen bereit, die Titanoxidhydratpartikel mit einer BET-Oberfläche von

mehr als 200 m$^2$/g und eine aus einer wasserlöslichen Zirkoniumverbindung bzw. einer wasserlöslichen Blei- und Zirkoniumverbindung erhaltene, vorzugsweise hydroxidische Verbindung enthalten.

Bevorzugt liegen solche Zubereitungen in getrockneter Form vor. Hierbei handelt es sich vorzugsweise um pulverförmige Zubereitungen.

Besonders bevorzugt wird eine wasserlösliche Zirkoniumverbindung bzw. eine wasserlösliche Blei- und Zirkoniumverbindung oder eine wässrige Lösung eines Zirkoniumsalzes bzw. eines Blei- und Zirkoniumsalzes zu Ttanoxidhydrat, bzw. einer wässrigen Suspension von Titanoxidhydrat gegeben und diese Suspension neutralisiert, filtriert und der erhaltene Filterkuchen gewaschen und getrocknet. Dabei wird ein Titanoxidhydrat erhalten, auf dessen Oberfläche die Zirkoniumverbindung bzw. die Blei- und Zirkoniumverbindung gleichmäßig verteilt sind. Das so erhaltene und mit der Zirkoniumverbindung bzw. Blei- und Zirkoniumverbindung beschichtete bzw. innig vermischte Titanoxidhydrat kann anschließend kalziniert werden.

Es ist auch möglich, die Trocknung und Kalzinierung in einem einzigen Verfahrensschritt durchzuführen.

Bei den Blei- bzw. Zirkoniumverbindungen handelt es sich bevorzugt um oxidische und/oder hydroxidische Verbindungen.

Enthält die Zubereitung Titanoxidhydratpartikel und eine Zirkoniumverbindung, so liegt das Titan/Zirkon-Verhältnis (Molverhältnis) bevorzugt zwischen 0,66 und 1,00 und insbesondere zwischen 0,75 und 0,9.

Bei Zubereitungen, die Titanoxidhydratpartikel sowie eine gefällte oder aufgefällte Zirkoniumverbindung und Bleiverbindung enthalten, beträgt das Molverhältnis [Zr] / [Ti] 0,25 bis 4, bevorzugt 1,00 bis 1,50 und das Molverhältnis [Pb]/[Zr] + [Ti]) 0,95 bis 1,05, bevorzugt 0,95 bis 1,0.

Bei der Herstellung der erfindungsgemäßen Zubereitungen als Zwischenprodukte für das Zirkoniumtitanat bzw. Bleizirkonattitanat können gegebenenfalls Dotierungsverbindungen zugegeben werden.

Als Dotierungsverbindungen können z.B. Nd-, Sr-, La-, Nb-, Ca-, Na-, K-, Cu-, Ni- oder Fe-Salze bzw. die entsprechenden Oxide zugegeben werden.

### Das Zirkoniumtitanat bzw. Bleizirkonattitanat

Die Erfindung stellt eine Zubereitung bereit, enthaltend Titanoxidhydratpartikeln mit einer BET-Oberfläche von mehr als 200 m$^2$/g und einer Zirkoniumverbindung, wobei das Molverhältnis von Zirkon und Titan zwischen 0,25 und 4 liegt.

Bevorzugt wird eine pulverförmige Zubereitung, wobei die Zirkoniumverbindung, bevorzugt als oxidische und/oder hydroxidische Verbindung, auf den Titanoxidhydratpartikeln abgeschieden und die Mischung anschließend getrocknet wurde.

Durch diese Umhüllung der TiO$_2$-Partikel mit Zirkoniumhydroxid kann die bereits bei tiefen Temperaturen einsetzende Umsetzung von Blei mit dem TiO$_2$ zu Bleititanat zumindest teilweise unterdrückt bzw. verzögert werden.

Die BET-Oberfläche dieser pulverförmigen Zubereitung beträgt vorzugsweise mehr als 50m$^2$/g, bevorzugt mehr als 100 m$^2$/g, besonders bevorzugt mehr als 150 m$^2$/g.

Der Chloridgehalt dieser pulverförmigen Zubereitung beträgt weniger als 100 ppm, bevorzugt weniger als 30 ppm.

Die Erfindung umfasst ferner Zirkoniumtitanat, welches durch das erfindungsgemäße Verfahren herstellbar ist, wobei es einen Chloridgehalt von weniger als 10 ppm, und einen Niob-Gehalt von 10 bis 300 ppm, bevorzugt von 20 bis 50 ppm aufweist.

Außerdem umfasst die Erfindung Bleizirkonattitanat, welches durch das erfindungsgemäße Verfahren herstellbar ist, wobei es einen Chloridgehalt von weniger als 10 ppm, und einen Niob-Gehalt von 1 bis 300 ppm, und bevorzugt 10 bis 300 ppm aufweist.

Die Erfindung stellt somit auch Bleizirkonattitanate bzw. Zirkoniumtitanate als Vorstufen für Bleizirkonattitanate bereit, die aus Zirkontitanhydrat (ZTH) erhältlich sind.

Das erfindungsgemäße Bleizirkonattitanat lässt sich durch die Summenformel Pb(Zr$_x$Ti$_{1-x}$) O$_3$ mit 0<x<1, vorzugsweise 0,4<x<0,8 beschreiben.

Der Chloridgehalt der Zirkoniumtitanate bzw. Bleizirkonattitanate beträgt weniger als 10 ppm.

Der Niobgehalt der Zirkoniumtitanate beträgt 10 bis 300 ppm, bevorzugt 15 bis 100 ppm und insbesondere 20 bis 50 ppm. Der Niobgehalt der Bleizirkonattitanate beträgt 1 bis 300 ppm, bevorzugt 10 bis 300 ppm, insbesondere 5 bis 15 ppm.

Vorzugsweise enthalten die erfindungsgemäßen Zirkoniumtitanate bzw. Bleizirkonattitanate zudem weniger als 1% Sulfat, besonders bevorzugt weniger als 500 ppm und insbesondere weniger als 200 ppm.

Vorzugsweise enthalten die erfindungsgemäßen Zirkoniumtitanate bzw. Bleizirkonattitanate weniger als 200 ppm, besonders bevorzugt weniger als 50 ppm, Natrium oder Kalium.

Vorzugsweise enthalten die erfindungsgemäßen Zirkoniumtitanate bzw. Bleizirkonattitanate zudem weniger als 20 ppm Eisen, bevorzugt weniger als 5 ppm.

Die Phasenreinheit des erfindungsgemäßen Produktes kann mittels Pulverröntgendiffraktometrie (XRD) bestimmt werden.

Die Sinterung der auf Grundlage der erfindungsgemäßen Pulver hergestellten Materialien zu Keramiken mit hinreichenden Dichten kann bei relativ niedriger Temperatur erfolgen. Ausgehend von nicht aufgemahlenem, calciniertem PZT Pulver (undotiert mit einem Zr/Ti Verhältnis 52.5/47.5) können bei einer Sintertemperatur von 950°C Keramiken mit relativen Dichten von 95% (gesintert an Luft) hergestellt werden. Die bei gegebener Sintertemperatur erreichbaren Dichten können durch Verwendung geeigneter Additive weiter erhöht werden.

Besonders vorteilhaft ist es, die erfindungsgemäßen Titandioxidpartikel entweder allein oder gemeinsam mit den verwendeten Zirkonverbindungen zu mahlen. Bevorzugt wird hierfür eine Nassmahlung verwendet, beispielsweise eine Perlmahlung. Hierdurch wird ein noch feineres, noch homogeneres und noch reaktionsfreudigeres Material erhalten.

Bei diesem Mahlungsschritt können auch die Bleiverbindungen und/oder weitere Dotierungsbestandteile anwesend sein.

Mikroelektronische Bauelemente

Die erfindungsgemäßen Bleizirkonattitanate, können zur Herstellung eines mikroelektronischen Bauelements, z.B. eines Vielschicht-Piezoaktors, verwendet werden. Aufgrund der Feinteiligkeit der erhaltenen Bleizirkonattitanate können besonders dünne Schichten und deshalb besonders kleine Bauteilabmessungen realisiert werden. Insbesondere die Anwendung in keramischen Vielschicht-Piezoaktoren kommt in Betracht, wobei aufgrund der Feinteiligkeit der erfindungsgemäßen Bleizirkonattitanate besonders dünne Schichten mit einer Schichtdicke von bevorzugt kleiner als 100 $\mu$m, besonders bevorzugt kleiner 80-50 $\mu$m, insbesondere kleiner 20 $\mu$m und am meisten bevorzugt kleiner als 10 $\mu$m, erhalten werden können. Außerdem ermöglicht die hohe Sinteraktivität bzw. niedrige Sintertemperatur der erfindungsgemäßen Bleizirkonattitanate die Verwendung von niedrigschmelzendem und kostengünstigem Elektrodenmaterial. So können z.B. Elektroden aus einer Ag/Pd Legierung mit einem höheren Ag-Anteil als üblich verwendet werden. Bei Sintertemperaturen unterhalb von 950°C ist es sogar möglich reine Ag-Elektroden oder Cu-Eketroden (Ts=1083°C) zu verwenden.

Solche Bauelemente können beispielsweise hergestellt werden, indem man aus dem Bleizirkonattitanat ggf. zusammen mit organischen Additiven einen Schlicker herstellt und diesen mit verschiedenen Methoden (z. B. Foliengießen, doctor-blade-Methode) zu dünnen Filmen auszieht. Entsprechende Bauelemente können auch nach dem Versetzen des Bleizirkonattitanats mit einem Presshilfsmittel (z. B. organischer Binder) zu einem Grünkörper gepresst werden, der vor dem Sinterprozess ausgebrannt wird.

Es ist auch möglich, die erfindungsgemäßen feinteiligen Bleizirkonattitanate in Mischung mit herkömmlichen gröberen Bleizirkonattitanaten zu verwenden. Auf diese Weise lässt sich die Mikrostruktur der entstehenden Keramik gezielt beeinflussen. So kann ein Gefüge, das sich durch eine gezielte Mischung von kleinen und großen Körnern auszeichnet, eingestellt werden, welches wiederum ein spezifisches Eigenschaftsprofil ermöglicht.

Es kann beispielsweise auch die Sinteraktivität durch den Zusatz des feinteiligen Materials zum herkömmlichen Material gesteigert werden, ohne dass die Korngröße der gesinterten Keramik bei vorgegebener Sintertemperatur gezielt vergrößert werden.

**Beispiele**

Die Erfindung wird im Folgenden anhand einiger ausgewählter Beispiele näher erläutert, wobei die Erfindung keineswegs auf diese Beispiele beschränkt ist.

Beispiel 1a):

Titanoxidhydrat (8 Gew.-% flüchtige Bestandteile, Anatas, BET: ca. 300 m$^2$/g, entspricht einer Kristallitgröße von 6 nm; analytische Angaben bezogen auf Ti0$_2$: 700 ppm S, 89 ppm Nb, 12 ppm Fe) wird in Wasser suspendiert und mit einer wässrigen Zirkonylchloridlösung versetzt. Die Mengenverhältnisse der Reaktanden werden so gewählt, dass das Molverhältnis von Zr zu Ti 0,525 zu 0,475 beträgt.

Durch Zugabe von Ammoniaklösung bis zu einem pH-Wert von 7,8 wird das gelöste Zirkonium auf die Titanoxidhydratpartikel aufgefällt. Die Suspension wird filtriert, gewaschen und der erhaltene Filterkuchen getrocknet.

Beispiel 1b)

In eine wässrige Suspension von Titanoxidhydrat, welche bei der Herstellung von Titandioxid nach dem Sulfatverfahren nach dem Verfahrensschritt der Bleiche erhalten wird, (mikrokristalliner Anatas, ca. 7 Gew. -% Sulfat bezogen auf Ti0$_2$, BET: ca. 300 m$^2$/g, entspricht einer Kristallitgröße von 6 nm) wird Zirkonylchloridlösung zugegeben. Die Mengenverhältnisse der Reaktanden werden so gewählt, dass das Molverhältnis von Zr zu Ti 0,525 zu 0,475 beträgt.

Durch Zugabe von Ammoniaklösung bis zu einem pH-Wert von 7,8 wird das gelöste Zirkonium auf die Titanoxidhydratpartikel aufgefällt. Die Suspension wird filtriert, gewaschen und der erhaltene Filterkuchen getrocknet.

Beispiel 1c):

In eine wässrige Suspension von Titanoxidhydrat, welche bei der Herstellung von Titandioxid nach dem Sulfatverfahren nach dem Verfahrensschritt der Bleiche erhalten wird, (mikrokristalliner Anatas, ca. 7 Gew.-% Sulfat bezogen auf $TiO_2$, BET: ca. 300 $m^2$/g, entspricht einer Kristallitgröße von 6 nm) werden gleichzeitig Zirkonylchloridlösung und Ammoniaklösung zugegeben, wodurch das gelöste Zirkonium auf die Titanoxidhydratpartikel aufgefällt wird.

Während der Zugabephase wird die Suspension in einem pH-Wert-Bereich von 6-8 gehalten und nach Zugabe der gesamten Menge Zirkonylchloridlösung mit Ammoniak auf pH 7,8 eingestellt. Die Mengenverhältnisse der Reaktanden werden so gewählt, dass das Molverhältnis von Zr zu Ti 0,544 zu 0,456 beträgt.

Die Suspension wird filtriert, gewaschen und der erhaltene Filterkuchen sprühgetrocknet. Das getrocknete Zirkon-Titanhydrat (ZTH) weist folgende Parameter auf:

Chlorid <20 ppm
Niobium 120 ppm
Sulfat 0,69 %
Restfeuchte 20,1%
Glühverlust 26,0% (1 h bei 1000°C)
BET 396 $m^2$/g

Beispiel 1d) :

Bis zur Herstellung der wässrigen Suspension von Titanoxidhydrat mit aufgefälltem Zirkonium wird die gleiche Verfahrensweise wie in Beispiel 1c) gewählt.

Die Suspension wird filtriert, gewaschen und der erhaltene Filterkuchen erneut mit Wasser zu einer Suspension (ca. 10% Feststoffgehalt) angemaischt. Diese Suspension wird in einer Perlmühle (LME 4 der Firma Netzsch) mit $ZrO_2$-Mahlkugeln (0,4-0,7 mm) mit einer Verweilzeit von 3 min pro Passage in zwei Passagen gemahlen (Gesamtverweilzeit 6 min; Energieeintrag ca. 200 kWh/t Feststoff; Temperaturanstieg während der Mahlung um etwa 19 K). Die erhaltene gemahlene Suspension wird anschließend sprühgetrocknet. Das getrocknete Zirkon-Titanhydrat (ZTH) weist folgende Parameter auf:

| | |
|---|---|
| Chlorid | <20 ppm |
| Niobium | 120 ppm |
| Sulfat | 0,72 % |
| Restfeuchte | 9,9 % |
| Glühverlust | 18,4 % |
| BET | 251 $m^2$/g (1 h bei 1000°C) |

Beispiel 2:

Eine in einem Attritor gemahlene und getrocknete Pulvermischung bestehend aus PbO (Alfa AESAR, Reinheit 99,99%), Zr/Ti-Hydrat (aus Beispiel 1c) und $La_2O_3$ (Dotierungselement, Fa.·Alfa AESAR, Reinheit 99,9%) entsprechend der späteren stöchiometrischen Zusammensetzung $Pb_{0,97} La_{0,02}(Zr_{0,525}Ti_{0,475})O_3$, wird gesiebt und anschließend bei einer Temperatur von T = 400°C in einem Ofen an Luft für 2 h in mit PbO gesättigten Aluminiumoxidtiegeln kalziniert. Dabei wird bei der Einwaage des Zr/Ti-Hydrat-Pulvers dessen Feuchtigkeitsanteil berücksichtigt.

Im Röntgendiffraktegramm wird nach der Kalzinierung vorrangig BleizirkonatTitanat (PZT) nachgewiesen.

Beispiel 3:

Das bei 400°C für.2 h kalzinierte Pulver, welches in Beispiel 2 erhalten wurde, wird anschließend nochmalig in einer Planetenkugelmühle 6 h lang aufgemahlen. Der Mahlung in Isopropanol schließen sich eine erneute Trocknung und Siebung an. Die gesiebten Pulver werden uniaxial zu Grünkörpern verpresst und anschließend in einer kaltisostatischen Presse nachverdichtet. Die Sinterung der Grünkörper erfolgt bei einer Temperatur von 1050°C (bzw. 950°C) und einer Haltezeit von 6 h an Luft. Die Proben befinden sich zur Vermeidung eines zu großen PbO-Verlustes während des Sintervorgangs in einem geschlossenen und mit PbO-gesättigten Aluminiumoxid-Tiegel. Die relativen Dichten der gesinterten Proben betragen bei einer Sintertemperatur von 950°C bis zu 95%; bei einer Temperatur von 1050°C werden relative Dichten von 97-98% erreicht.

Beispiel 4 (Vergleichsbeispiel) :

Eine in einem Attritor gemahlene und getrocknete Pulvermischung, bestehend aus PbO (Fa. Alfa AESAR, Reinheit 99,99%), $Zr0_2$ (Fa. Tosoh), $TiO_2$ (TR-HP-2 der Firma Kerr-McGee) und $La_20_3$ (Dotierungselement, Fa. Alfa AESAR Reinheit 99,9%)entsprechend der späteren stöchiometrischen Zusammensetzung $Pbo,97\ Lao,o2$ $(Zr_{0,525}Ti_{0,475})O_3$ (vgl. Bsp. 2) wird in einem Luftofen für 2 Stunden bei 850°C kalziniert. Das Pulver wird nach der Kalzinierung in Isopropanol aufgemahlen, getrocknet, gesiebt und zu Grünkörpern durch uniaxiales und kaltisostatisches Pressen weiterverarbeitet. Anschließend werden die Grünkörper bei 950-1050 °C für 6 Stunden an Luft gesintert. Die Proben befinden sich dabei in einem geschlossenen $Al_2O_3$-Tiegel (Vorgehensweise vgl. Bsp. 3). Die relativen Dichten der gesinterten Proben liegen bei einer Sintertemperatur von 950°C unter 80%; die relative Dichte erhöht sich auf 97% bei einer Erhöhung der Sintertemperatur auf 1050°C.

Beispiel 5:

Die Herstellung von keramischen Prüfkörpern erfolgt bis zur Kalzinierung wie in Bsp. 3, jedoch werden danach die bei 400°C kalzinierten Pulver ohne jegliche Mahlung oder Siebung sofort zu Grünkörpern durch uniaxiales und kaltisostatisches Pressen weiterverarbeitet und anschließend gesintert.

Bei einer Sinterung der Grünkörper bei einer Temperatur von 1050°C und einer Haltezeit von 6 h an Luft wird eine Dichte von 97 % der theoretischen Dichte erhalten.

Bei einer Sinterung der Grünkörper bei einer Temperatur von 950°C und einer Haltezeit von 6 h an Luft wird eine Dichte von 95% der theoretischen Dichte erhalten.

Beispiel 6:

Eine in einem Attritor gemahlene und getrocknete Pulvermischung, bestehend aus PbO, Zr/Ti-Hydrat (aus Beispiel 1b) und $La_2O_3$ (Dotierungselement) wird durch uniaxiales und kaltisostatisches Pressen direkt zu Grünkörpern verarbeitet und anschließend gesintert. Das bedeutet, Sinterung und Kalzinierung erfolgen in einem Verfahrensschritt (Reaktionssintern). Die relativen Dichten der reaktionsgesinterten Proben betragen 92%.

Beispiel 7:

Das aus Beispiel 1d erhaltene getrocknete Ti-Zr-Hydrat wird in einem Muffelofen 2 Stunden bei 1250°C kalziniert.

Dabei wird ein kristallines Zirkontitanat erhalten.

Beispiel 8:

Zu einer wässrigen Suspension von Titanoxidhydrat (9 Gew.-% flüchtige Bestandteile, Anatas, BET: 271 $m^2$/g, entspricht einer Kristallitgröße von 6 nm; analytische Angaben bezogen auf $TiO_2$: 700 ppm S, <20 ppm Cl, 310 ppm Nb, 10 ppm Fe) wird eine wässrige Bleiacetatlösung und anschließend eine wässrige Zirkonylsulfatlösung gegeben. Die Mengenverhältnisse der Reaktanden werden so gewählt, dass die daraus hergestellten Bleizirkonattitanate eine Zusammensetzung entsprechend der Formel $Pb_{o,98}(Zr_{0,54}Ti_{0,46})O_3$ aufweisen.

Durch Zugabe von Ammoniak bis zu einem pH-Wert von 7,0 werden die gelösten Verbindungen auf die Titanoxidhydratpartikel aufgefällt. Die. Suspension wird filtriert, gewaschen und der erhaltene Filterkuchen getrocknet.

Beispiel 9:

Das aus Beispiel 8 erhaltene Material wird 30 Minuten bei einer Temperatur von 500°C kalziniert. Im Röntgendiffraktegramm werden $PbTiO_3$ und $PbZrO_3$ nachgewiesen; die vor der Kalzinierung vorhandenen Anatas Reflexe sind vollständig verschwunden.

Beispiel 10:

Pulverförmiges Titanoxidhydrat(Zusammensetzung wie in Beispiel 8) wird mit feinteiligem Zirkonoxid und Bleioxid gemischt und aufgemahlen. Die Mengenverhältnisse der Reaktanden werden so gewählt, dass die daraus herstellbaren Bleizirkonattitanate eine Zusammensetzung entsprechend der Formel $Pb_{0,98}(Zr_{0,54}Ti_{0,46})O3$ aufweisen.

Das erhaltene Pulvergemisch setzt sich bei niedrigeren Temperaturen zum Bleizirkonattitanat um als ein analog hergestelltes Pulvergemisch, bei dem anstelle des Titanoxidhydrat eine Titandioxidkomponente mit einer Teilchengröße von 200 nm verwendet wurde.

Beispiel 11 (Vergleichsbeispiel):

Zu einer wässrigen Suspension von Titandioxid in der Rutilmodifikation mit einer Teilchengröße von 200 nm und einer BET-Oberfläche von 6 $m^2$/g wird eine wässrige Bleiacetatlösung und anschließend eine wässrige Zirkonylsulfatlösung gegeben. Die Mengenverhältnisse der Reaktanden werden so gewählt, dass die daraus hergestellten Bleizirkontitanate eine Zusammensetzung entsprechend der Formel $Pb_{0,98}(Zr_{0,54}Ti_{0,46})\ O_3$ aufweisen. Durch Zugabe von Ammoniak bis zu einem pH-Wert von 7,0 werden die gelösten Verbindungen auf die Titandioxid aufgefällt. Die Suspension wird filtriert, gewaschen und der erhaltene Filterkuchen getrocknet. Das so erhaltene Material wird 30 Minuten bei einer Temperatur von 500°C kalziniert.

Das Titandioxid hat sich bei dieser Temperatur nur teilweise umgesetzt; im Röntgendiffraktogramm werden neben verschiedenen anderen Phasen noch deutliche Anteile an Rutil nachgewiesen.

**Patentansprüche**

1. Verfahren zur Herstellung von Zirkoniumtitanaten, wobei Zirkoniumverbindungen mit Titandioxidpartikeln mit einer BET-Oberfläche von mehr als 200 $m^2$/g umgesetzt werden, wobei entweder

   a) die Titandioxidpartikel mit Zirkoniumoxid bzw. Zirkoniumhydroxid trocken gemahlen und anschließend kalziniert oder teilkalziniert werden, oder
   b) die Titandioxidpartikel in einer zirkoniumhaltigen Lösung oder zusammen mit einem wasserlöslichen Zirkoniumsalz in Wasser suspendiert werden, die Suspension dann neutralisiert, getrocknet und anschließend kalziniert wird.

2. Verfahren zur Herstellung von Bleizirkonattitanaten, wobei Blei- und Zirkoniumverbindungen mit Titandioxidpartikeln mit einer BET-Oberfläche von mehr als 200 $m^2$/g umgesetzt werden, wobei entweder

   a) die Titandioxidpartikel mit Zirkoniumoxid bzw. Zirkoniumhydroxid und einer Bleiverbindung trocken gemahlen und anschließend kalziniert oder teilkalziniert werden, oder
   b) die Titandioxidpartikel in einer zirkoniumhaltigen Lösung oder zusammen mit einem wasserlöslichen Zirkoniumsalz in Wasser suspendiert werden, die Suspension dann neutralisiert und getrocknet wird und dann zusammen mit einer Bleiverbindung kalziniert wird.

3. Verfahren nach einem der Ansprüche 1 oder 2, **dadurch gekennzeichnet, dass** die Zirkoniumverbindungen in Form eines Fällungsprodukts mit einer BET-Oberfläche von mehr als 20 $m^2$/g, bevorzugt mehr als 50 $m^2$/g, besonders bevorzugt mehr als 100 $m^2$/g, verwendet werden, das durch Neutralisation einer wässrigen Zirkoniumsalzlösung erhalten wird.

4. Verfahren nach Anspruch 3, **dadurch gekennzeichnet, dass** das durch Neutralisation einer wässrigen Zirkoniumsalzlösung erhaltene Fällungsprodukt eine oder mehrere der Verbindungen Zirkoniumhydroxid, Zirkoniumoxyhydroxid oder Zirkoniumoxid enthält.

5. Verfahren nach einem der Ansprüche 3 oder 4, **dadurch gekennzeichnet, dass** das durch Neutralisation einer wässrigen Zirkoniumsalzlösung erhaltene Fällungsprodukt auf den Titandioxidpartikeln aufgefällt ist.

6. Verfahren nach einem der Ansprüche 3 oder 4, **dadurch gekennzeichnet, dass** das durch Neutralisation einer wässrigen Zirkoniumsalzlösung erhaltene Fällungsprodukt mit den anderen Komponenten gemischt und diese Mischung gegebenenfalls gemahlen wird.

7. Verfahren nach einem der vorhergehenden Ansprüche, **dadurch gekennzeichnet, dass** die Titandioxidpartikel weniger als 1000 ppm Halogenide, bezogen auf $TiO_2$, enthalten.

8. Verfahren nach einem der vorhergehenden Ansprüche, **dadurch gekennzeichnet, dass** die Titandioxidpartikel in der Anatas-Kristallstruktur vorliegen.

9. Verfahren nach einem der vorhergehenden Ansprüche, **dadurch gekennzeichnet, dass** die Titandioxidpartikel weniger als 100 ppm Chlorid, bezogen auf $TiO_2$, enthalten.

10. Verfahren nach einem der vorhergehenden Ansprüche, **dadurch gekennzeichnet, dass** die BET-Oberfläche der Titandioxidpartikel 200 bis 380 $m^2$/g beträgt.

11. Verfahren nach einem der vorhergehenden Ansprüche, **dadurch gekennzeichnet, dass** die Titandioxidpartikel weniger als 200 ppm, bevorzugt weniger als 50 ppm, Natrium, und weniger als 200 ppm, bevorzugt weniger als 50 ppm, Kalium, bezogen auf $TiO_2$, enthalten.

12. Verfahren nach einem der vorhergehenden Ansprüche, **dadurch gekennzeichnet, dass** die Titandioxidpartikel Titanoxidhydratpartikel mit einem $H_2O$-Gehalt von 0,4 bis 25 Gew.-% sind.

13. Verfahren nach Anspruch 12, **dadurch gekennzeichnet, dass** die Titanoxidhydratpartikel einen $H_2O$-Gehalt von 2 bis 10 Gew.-%, bezogen auf $TiO_2$, aufweisen.

14. Verfahren nach einem der vorhergehenden Ansprüche, **dadurch gekennzeichnet, dass** die Titandioxidpartikel einen Sulfat-Gehalt von weniger als 1 Gew.-%, bezogen auf $TiO_2$, aufweisen.

15. Verfahren nach einem der vorhergehenden Ansprüche, **dadurch gekennzeichnet, dass** die Titandioxidpartikel, bezogen auf $TiO_2$, 10 bis 2000 ppm Niob enthalten.

16. Verfahren nach einem der vorhergehenden Ansprüche, **dadurch gekennzeichnet, dass** die Titandioxidpartikel weniger als 10 ppm Eisen, bezogen auf $TiO_2$, enthalten.

17. Verfahren nach einem der vorhergehenden Ansprüche, **dadurch gekennzeichnet, dass** die Titandioxidpartikel durch Hydrolyse von Titanylsulfat erhältlich sind und ohne dazwischenliegende Trocknung mit einer wasserlöslichen Zirkoniumverbindung umgesetzt werden.

18. Verfahren nach einem der Ansprüche 1 oder 3 bis 17, **dadurch gekennzeichnet, dass** die Titandioxidpartikel in Suspension mit einer wasserlöslichen Zirkoniumverbindung umgesetzt werden, wobei die gelöste Zirkoniumverbindung durch Zugabe alkalischer Verbindungen neutralisiert und ausgefällt wird, indem die gelöste Zirkoniumverbindung gleichzeitig mit dem Neutralisationsmittel der Suspension zugegeben wird.

19. Verfahren nach Anspruch 18, **dadurch gekennzeichnet, dass** die erhaltene Mischung durch Filtration abgetrennt und gegebenenfalls anschließend gewaschen und getrocknet wird, so dass ein pulverförmiges Material erhalten wird, welches Titandioxid und eine ausgefällte oxidische und/oder hydroxidische Zirkoniumverbindung enthält.

20. Verfahren nach einem der Ansprüche 2 oder 3 bis 17, **dadurch gekennzeichnet, dass** die Titandioxidpartikel in Suspension mit einer wasserlöslichen Zirkoniumverbindung und einer wasserlöslichen Bleiverbindung umgesetzt werden, wobei die gelöste Zirkonium- und Bleiverbindung durch Zugabe alkalischer Verbindungen neutralisiert und ausgefällt werden.

21. Verfahren nach Anspruch 20, **dadurch gekennzeichnet, dass** die erhaltene Mischung durch Filtration abgetrennt und gegebenenfalls anschließend gewaschen und getrocknet wird, so dass ein pulverförmiges Material bestehend aus Titandioxid und ausgefällten Oxiden und/oder Hydroxiden des Zirkoniums und des Bleis vorliegt.

22. Verfahren nach einem oder mehrerer der Ansprüche 1 bis 21, **dadurch gekennzeichnet, dass** die erhaltene Mischung entweder vor der Trocknung einer Nassmahlung, bevorzugt einer Perlmahlung, oder nach der Trocknung einer Trockenmahlung unterzogen wird.

23. Verfahren nach einem der Ansprüche 18 oder 20, **dadurch gekennzeichnet, dass** nach der Trocknung eine Kalzinierung oder Teilkalzinierung bei einer Temperatur von maximal 650°C, bevorzugt unterhalb von 500°C, besonders bevorzugt unterhalb von 400°C, erfolgt.

**EP 1 831 107 B1**

24. Verfahren nach Anspruch 23, **dadurch gekennzeichnet, dass** die Kalzinierung nicht isotherm, sondern bei näherungsweise konstanter Umwandlungsrate zum nicht-dotierten oder dotierten Zirkoniumtitanat bzw. Bleizirkonattitanat erfolgt.

25. Verfahren nach einem der vorhergehenden Ansprüche, **dadurch gekennzeichnet, dass** nach der Kalzinierung eine Sinterung bei einer Temperatur von maximal 1050°C, bevorzugt unterhalb von 950°C, erfolgt.

26. Verfahren nach einem der Ansprüche 23 bis 25, **dadurch gekennzeichnet, dass** nach der Kalzinierung bei der Mahlung ein spezifischer Energieeintrag von maximal 80 kWh pro Tonne Feststoff, bevorzugt weniger als 30 kWh pro Tonne verwendet wird.

27. Verfahren nach einem der Ansprüche 23 bis 25, **dadurch gekennzeichnet, dass** nach der Kalzinierung die Weiterverarbeitung ohne einen dazwischenliegenden Mahlungsschritt erfolgt.

28. Verfahren nach einem der Ansprüche 23 bis 27, **dadurch gekennzeichnet, dass** Kalzinierung und Sinterung in einem einzigen Schritt in Form eines "Reaktionssinterns" erfolgt.

29. Verfahren nach Anspruch 25, **dadurch gekennzeichnet, dass** bei der Sinterung eine relative Dichte von mindestens 97%, bevorzugt von mindestens 98,5%, erreicht wird.

30. Verfahren nach einem der Ansprüche 2, 3 bis 17 oder 20 bis 29, **dadurch gekennzeichnet, dass** das exakte gewünschte Zr/Ti-Verhältnis durch Mischen zweier homogener Zirkontitanhydrat-Edukte mit unterschiedlichem Zr/Ti-Verhältnis eingestellt wird und die Bleiverbindung und die Dotierungskomponenten dieser Mischung ebenfalls zugegeben werden.

31. Verfahren nach einem der Ansprüche 2, 3 bis 17 oder 20 bis 29, **dadurch gekennzeichnet, dass** das exakte gewünschte Pb/Zr/Ti-Verhältnis durch Mischen zweier homogener Zirkontitanhydrat-Edukte mit unterschiedlichem Zr/Ti-Verhältnis sowie eines dritten Eduktes, welches neben Zirkontitanhydrat zusätzlich die Bleiverbindung enthält, eingestellt wird und die Dotierungskomponenten dieser Mischung ebenfalls zugegeben werden.

32. Verfahren nach einem der Ansprüche 18 bis 31, **dadurch gekennzeichnet, dass** die Suspension oder Lösung eine oder mehrere weitere Dotierungsverbindungen enthält.

33. Zubereitung, enthaltend Titanoxidhydratpartikel mit einer BET-Oberfläche von mehr als 200 $m^2$/g und eine Zirkoniumverbindung, wobei das Molverhältnis von Zirkon und Titan zwischen 0,25 und 4 liegt.

34. Zubereitung nach Anspruch 33, **dadurch gekennzeichnet, dass** das Molverhältnis von Titan und Zirkonium zwischen 0,75 und 0,90 liegt.

35. Zubereitung nach einem der Ansprüche 33 oder 34, **dadurch gekennzeichnet, dass** die Zubereitung pulverförmig ist.

36. Zubereitung nach Anspruch 35, **dadurch gekennzeichnet, dass** die Zirkoniumverbindung, bevorzugt als oxidische und/oder hydroxidische Verbindung, auf den Titanoxidhydratpartikeln abgeschieden und die Mischung anschließend getrocknet wurde.

37. Zubereitung nach einem der Ansprüche 34 bis 36, **dadurch gekennzeichnet, dass** die BET-Oberfläche der Zubereitung mehr als 50 $m^2$/g, bevorzugt mehr als 100 $m^2$/g, besonders bevorzugt mehr als 150 $m^2$/g, beträgt.

38. Zubereitung nach einem der Ansprüche 35 bis 37, **dadurch gekennzeichnet, dass** der Chloridgehalt weniger als 100 ppm, bevorzugt weniger als 30 ppm, beträgt.

39. Zubereitung, enthaltend Titanoxidhydratpartikel mit einer BET-Oberfläche von mehr als 200 $m^2$/g, sowie eine gefällte oder aufgefällte Zirkoniumverbindung sowie eine Bleiverbindung, wobei das Molverhältnis von Pb, Zr und Ti so beschaffen ist, dass [Zr]/[Ti] = 0,25 bis 4, bevorzugt 1,0 bis 1,5, und [Pb]/([Zr]+[Ti]) = 0,95 bis 1,05, bevorzugt 0,95 bis 1,0, beträgt.

40. Zubereitung nach Anspruch 39, wobei die wasserlösliche Blei- und/oder Zirkoniumverbindung auf den Titanoxidhydratpartikeln abgeschieden wurden und die Mischung anschließend getrocknet wurde.

41. Zirkoniumtitanat, welches durch ein Verfahren nach einem oder mehreren der Ansprüche 1, 3 bis 19 oder 22 bis 29 herstellbar ist, wobei es einen Chloridgehalt von weniger als 10 ppm, und einen Niob-Gehalt von 10 bis 300 ppm, bevorzugt von 20 bis 50 ppm aufweist.

42. Bleizirkonattitanat, welches durch ein Verfahren nach einem oder mehreren der Ansprüche 2, 3 bis 17 oder 20 bis 31 herstellbar ist, wobei es einen Chloridgehalt von weniger als 10 ppm, und einen Niob-Gehalt von 1 bis 300 ppm, und bevorzugt 10 bis 300 ppm aufweist.

43. Verwendung eines Bleizirkonattitanats nach Anspruch 42 zur Herstellung eines mikroelektronischen Bauelements.

44. Verfahren zur Herstellung eines mikroelektronischen Bauelements, wobei ein Bleizirkonattitanat nach Anspruch 42 gemahlen und dann zu einem Grünkörper gepresst und anschließend gesintert wird.

45. Verfahren zur Herstellung eines mikroelektronischen Bauelements, wobei ein Bleizirkonattitanat nach Anspruch 42 gemahlen und dann zu einer Folie verarbeitet und anschließend gesintert wird.

46. Verfahren nach einem der Ansprüche 44 oder 45, **dadurch gekennzeichnet, dass** die Verarbeitung zu dem Grünkörper oder der Folie mit Hilfe von organischen Zusätzen erfolgt.

47. Mikroelektronisches Bauelement umfassend ein Bleizirkonattitanat nach Anspruch 42.

48. Mikroelektronisches Bauelement nach Anspruch 47, wobei das Bleizirkonattitanat in Form einer Schicht mit einer Dicke von weniger als 100 $\mu$m, bevorzugt weniger als 20 $\mu$m, vorliegt.

**Claims**

1. Method for the production of zirconium titanates, wherein zirconium compounds are reacted with titanium dioxide particles having a BET surface area of more than 200 m$^2$/g, wherein either

   a) the titanium dioxide particles are dry milled with zirconium oxide and/or zirconium hydroxide and subsequently calcined or partially calcined, or
   b) the titanium dioxide particles are suspended in a zirconium-containing solution or together with a water-soluble zirconium salt in water, the suspension is then neutralized, dried and then calcined.

2. Method for the production of lead zirconate titanates, wherein lead- and zirconium- compounds are reacted with titanium dioxide particles having a BET surface area of more than 200 m$^2$/g, wherein either

   a) the titanium dioxide particles are dry milled with zirconium oxide and/or zirconium hydroxide and a lead compound and subsequently calcined or partially calcined, or
   b) the titanium dioxide particles are suspended in a zirconium-containing solution or together with a water-soluble zirconium salt in water, the suspension is then neutralized and dried and then calcined together with a lead compound.

3. Method according to any one of claims 1 or 2, **characterized in that** the zirconium compounds are used in the form of a precipitate having a BET surface area of more than 20 m$^2$/g, preferably of more than 50 m$^2$/g, particularly preferably of more than 100 m$^2$/g, which is obtained by neutralizing an aqueous zirconium salt solution.

4. Method according to claim 3, **characterized in that** the precipitate obtained by neutralizing an aqueous zirconium salt solution contains one or more compounds of zirconium hydroxide, zirconium oxyhydroxide or zirconium oxide.

5. Method according to any one of claims 3 or 4, **characterized in that** the precipitate obtained by neutralizing an aqueous zirconium salt solution is precipitated on the titanium dioxide particles.

6. Method according to any one of claims 3 or 4, **characterized in that** the precipitate obtained by neutralizing an aqueous zirconium salt solution is mixed with other components and the mixture is optionally milled.

7. Method according to any one of the preceding claims, **characterized in that** the titanium dioxide particles contain less than 1000 ppm of halides, based on $TiO_2$.

8. Method according to any one of the preceding claims, **characterized in that** the titanium dioxide particles are present in the anatase crystal structure.

9. Method according to any one of the preceding claims, **characterized in that** the titanium dioxide particles contain less than 100 ppm of chloride, based on $TiO_2$.

10. Method according to any one of the preceding claims, **characterized in that** the BET surface area of the titanium dioxide particles is 200 to 380 m2/g.

11. Method according to any one of the preceding claims, **characterized in that** the titanium dioxide particles contain less than 200 ppm, preferably less than 50 ppm of sodium, and less than 200 ppm, preferably less than 50 ppm of potassium, based on $TiO_2$.

12. Method according to any one of the preceding claims, **characterized in that** the titanium dioxide particles are titanium oxide hydrate particles having a $H_2O$-content of 0.4 to 25 wt.%.

13. Method according to claim 12, **characterized in that** the titanium oxide hydrate particles have a $H_2O$-content of 2 to 10 wt.%, based on $TiO_2$.

14. Method according to any one of the preceding claims, **characterized in that** the titanium dioxide particles have a sulfate content of less than 1 wt.%, based on $TiO_2$.

15. Method according to any one of the preceding claims, **characterized in that** the titanium dioxide particles contain 10 to 2000 ppm of niobium based on $TiO_2$.

16. Method according to any one of the preceding claims, **characterized in that** the titanium dioxide particles contain less than 10 ppm iron, based on $TiO_2$.

17. Method according to any one of the preceding claims, **characterized in that** the titanium dioxide particles are obtainable through hydrolysis of titanyl sulfate and are reacted with a water-soluble zirconium compound without intermediate drying.

18. Method according to any one of claims 1 or 3 to 17, **characterized in that** the titanium dioxide particles are reacted in suspension with a water-soluble zirconium compound, wherein the dissolved zirconium compound is neutralized and precipitated by adding the dissolved zirconium compound simultaneously with the neutralizing agent to the suspension.

19. Method according to claim 18, **characterized in that** the obtained mixture is separated by filtration and optionally subsequently washed and dried so that a powdery material is obtained, which contains titanium dioxide and a selected oxide and/or hydroxide of zirconium compound.

20. Method according to any one of claims 2 or 3 to 17, **characterized in that** the titanium dioxide particles are reacted in suspension with a water-soluble zirconium compound and a water-soluble lead compound, wherein the dissolved zirconium- and lead compound are neutralized and precipitated by adding alkaline compounds.

21. Method according to claim 20, **characterized in that** the obtained mixture is separated by filtration and is optionally subsequently washed and dried so that a powdery material consisting of titanium dioxide and precipitated oxides and/or hydroxides of zirconium and lead is obtained.

22. Method according to one or more of claims 1 to 21, **characterized in that** the obtained mixture is subjected to either before drying wet milling, preferably bead milling, or to dry milling after drying.

23. Method according to one of claims 18 or 20, **characterized in that** a calcination or partial calcination is carried out at a temperature of maximal 650 °C, preferably below 500 °C, particularly preferably below 400 °C after drying.

24. Method according to claim 23, **characterized in that** the calcination is not carried out isothermally, but at an approximately constant conversion rate to non-doped or doped zirconium titanate or lead zirconate titanate.

25. Method according to any one of the preceding claims, **characterized in that** a sintering is carried out after calcination at a temperature of maximal 1050 °C, preferably below 950 °C.

26. Method according to any one of claims 23 to 25, **characterized in that** a specific energy input of preferably a maximum of 80 kWh per ton of solid, preferably of less than 30 kWh per ton, is used in the milling after calcination.

27. Method according to any one of claims 23 to 25, **characterized in that** the further processing after calcination is carried out without an intermediate milling step.

28. Method according to any one of claims 23 to 27, **characterized in that** the calcination and sintering are carried out in a single step in the form of a "reaction sintering".

29. Method according to claim 25, **characterized in that** a relative density of at least 97%, preferably of at least 98.5% is achieved during sintering.

30. Method according to any one of claims 2, 3 to 17 or 20 to 29, **characterized in that** the exact desired Zr/Ti-ratio is adjusted by mixing two homogeneous zirconium titanium hydrate starting materials with different Zr/Ti ratio and the lead compound and the doping components are also added to this mixture.

31. Method according to any one of claims 2, 3 to 17 or 20 to 29, **characterized in that** the exact desired Pb/Zr/Ti ratio is adjusted by mixing two homogeneous zirconium titanium hydrate starting materials with different Zr/Ti ratio as well as a third starting material, which contains lead compound in addition to zirconium titanium hydrate, and that the doping components are also added to this mixture.

32. Method according to any one of claims 18 to 31, **characterized in that** the suspension or solution contains one or more further doping compounds.

33. Preparation, containing titanium oxide particles having a BET surface area of more than 200 $m^2$/g and a zirconium compound, wherein the molar ratio of zirconium and titanium is between 0.25 and 4.

34. Preparation according to claim 33, **characterized in that** the molar ratio of titanium and zirconium is between 0.75 and 0.9.

35. Preparation according to any one of claim 33 or 34, **characterized in that** the preparation is in powder form.

36. Preparation according to claim 35, **characterized in that** the zirconium compound, preferably as oxide and/or hydroxide compound, deposited on the titanium oxide hydrate particles and the mixture was subsequently dried.

37. Preparation according to claims 34 to 36, **characterized in that** the BET surface area of the preparation is more than 50 $m^2$/g, preferably more than 100 $m^2$/g, particularly preferably more than 150 $m^2$/g.

38. Preparation according to any one of claims 35 to 37, **characterized in that** the chloride content is less than 100 ppm, preferably less than 30 ppm.

39. Preparation, containing titanium oxide hydrate particles having a BET surface area of more than 200 $m^2$/g, and a precipitated or deposited zirconium compound and a lead compound, wherein the molar ratio of Pb, Zr and Ti is [Zr]/[Ti] = 0.25 to 4, preferably 1.0 to 1.5, and [Pb]/([Zr] + [Ti]) = 0.95 to 1.05, preferably 0.95 to 1.0.

40. Preparation according to claim 39, wherein the water-soluble lead and/or zirconium compound was deposited on the titanium oxide hydrate particles and the mixture was subsequently dried.

41. Zirconium titanate, which is obtainable by a method according to one or more of claims 1, 3 to 19 or 22 to 29, having a chloride content of less than 10 ppm, and a niobium content of 10 to 300 ppm, preferably of 20 to 50 ppm.

42. Lead zirconate titanate, which is obtainable by a method according to one or more of claims 2, 3 to 17 or 20 to 31, having a chloride content of less than 10 ppm and a niobium content of 1 to 300 ppm, and preferably 10 to 300 ppm.

43. Use of a lead zirconate titanates according to claim 42 for the production of a microelectronic component.

44. Method for the production of a microelectronic component, wherein a lead zirconate titanate according to claim 42 is milled and then pressed into a green body and subsequently is sintered.

45. Method for the production of a microelectronic component, wherein a lead zirconate titanate according to claim 42 is milled and then processed into a film and subsequently is sintered.

46. Method according to any one of claims 44 or 45, **characterized in that** the processing into the green body or the film is carried out with the aid of organic additives.

47. Microelectronic component comprising a lead zirconate titanate according to claim 42.

48. Microelectronic component according to claim 47, wherein the lead zirconate titanate is in the form of a layer with a thickness of less than 100 $\mu$m, preferably less than 20 $\mu$m.


**Revendications**

1. Procédé de préparation de titanates de zirconium, consistant à faire réagir des composés de zirconium avec des particules de dioxyde de titane dont la surface BET est supérieure à 200 m$^2$/g,

    a) les particules de dioxyde de titane étant broyées à sec avec de l'oxyde de zirconium et/ou de l'hydroxyde de zirconium pour subir ensuite une calcination ou calcination partielle, ou bien
    b) les particules de dioxyde de titane étant mises en suspension dans une solution contenant du zirconium ou, ensemble avec un sel de zirconium hydrosoluble, dans de l'eau, pour ensuite neutraliser et sécher la suspension puis la calciner.

2. Procédé de préparation de zirconates-titanates de plomb, consistant à faire réagir des composés de plomb et de zirconium avec des particules de dioxyde de titane dont la surface BET est supérieure à 200 m$^2$/g,

    a) les particules de dioxyde de titane étant broyées à sec avec de l'oxyde de zirconium et/ou de l'hydroxyde de zirconium et avec un composé de plomb pour subir ensuite une calcination ou calcination partielle, ou bien
    b) les particules de dioxyde de titane étant mises en suspension dans une solution contenant du zirconium ou, ensemble avec un sel de zirconium hydrosoluble, dans de l'eau, pour ensuite neutraliser et sécher la suspension puis la calciner ensemble avec un composé de plomb.

3. Procédé selon l'une des revendications 1 ou 2, **caractérisé en ce que** les composés de zirconium sont mis en oeuvre sous forme d'un produit de précipitation qui présente une surface BET supérieure à 20 m$^2$/g, de préférence supérieure à 50 m$^2$/g, avec une préférence particulière supérieure à 100 m$^2$/g, et qui est obtenu par neutralisation d'une solution aqueuse de sels de zirconium.

4. Procédé selon la revendication 3, **caractérisé en ce que** le produit de précipitation, obtenu par neutralisation d'une solution aqueuse de sels de zirconium, contient un ou plusieurs des composés hydroxyde de zirconium, oxyhydroxyde de zirconium ou oxyde de zirconium.

5. Procédé selon l'une des revendications 3 ou 4, **caractérisé en ce que** le produit de précipitation, obtenu par neutralisation d'une solution aqueuse de sels de zirconium, est précipité sur les particules de dioxyde de titane.

6. Procédé selon l'une des revendications 3 ou 4, **caractérisé en ce que** le produit de précipitation, obtenu par neutralisation d'une solution aqueuse de sels de zirconium, est mélangé avec les autres composants et que ce mélange est éventuellement broyé.

7. Procédé selon l'une des revendications précédentes, **caractérisé en ce que** les particules de dioxyde de titane contiennent moins de 1000 ppm d'halogénures, par rapport au TiO$_2$.

8. Procédé selon l'une des revendications précédentes, **caractérisé en ce que** les particules de dioxyde de titane ont une structure cristalline d'anatase.

9. Procédé selon l'une des revendications précédentes, **caractérisé en ce que** les particules de dioxyde de titane contiennent moins de 100 ppm de chlorure, par rapport au $TiO_2$.

10. Procédé selon l'une des revendications précédentes, **caractérisé en ce que** la surface BET des particules de dioxyde de titane est comprise entre 200 et 380 $m^2$/g.

11. Procédé selon l'une des revendications précédentes, **caractérisé en ce que** les particules de dioxyde de titane contiennent moins de 200 ppm, de préférence moins de 50 ppm, de sodium et moins de 200 ppm, de préférence moins de 50 ppm, de potassium, par rapport au $TiO_2$.

12. Procédé selon l'une des revendications précédentes, **caractérisé en ce que** les particules de dioxyde de titane sont des particules d'hydrate d'oxyde de titane dont la teneur en $H_2O$ est comprise entre 0,4 et 25 % en poids.

13. Procédé selon la revendication 12, **caractérisé en ce que** les particules d'hydrate d'oxyde de titane présentent une teneur en $H_2O$ comprise entre 2 et 10 % en poids, par rapport au $TiO_2$.

14. Procédé selon l'une des revendications précédentes, **caractérisé en ce que** les particules de dioxyde de titane présentent une teneur en sulfate inférieure à 1 % en poids, par rapport au $TiO_2$.

15. Procédé selon l'une des revendications précédentes, **caractérisé en ce que** les particules de dioxyde de titane contiennent 10 à 2 000 ppm de niobium, par rapport au $TiO_2$.

16. Procédé selon l'une des revendications précédentes, **caractérisé en ce que** les particules de dioxyde de titane contiennent moins de 10 ppm de fer, par rapport au $TiO_2$.

17. Procédé selon l'une des revendications précédentes, **caractérisé en ce que** les particules de dioxyde de titane peuvent être obtenues par hydrolyse de sulfate de titanyle et qu'on les fait réagir, sans intercaler un séchage, avec un composé de zirconium hydrosoluble.

18. Procédé selon l'une des revendications 1 ou 3 à 17, **caractérisé en ce que** l'on fait réagir les particules de dioxyde de titane en suspension avec un composé de zirconium hydrosoluble, le composé de zirconium en solution étant neutralisé et précipité par ajout de composés alcalins, en ajoutant à la suspension, simultanément avec l'agent de neutralisation, le composé de zirconium en solution.

19. Procédé selon la revendication 18, **caractérisé en ce que** le mélange obtenu est séparé par filtration pour ensuite éventuellement le laver et sécher, de manière à obtenir un matériau pulvérulent qui contient du dioxyde de titane et un composé de zirconium de type oxyde et/ou hydroxyde ayant subi une précipitation.

20. Procédé selon l'une des revendications 2 ou 3 à 17, **caractérisé en ce que** l'on fait réagir les particules de dioxyde de titane en suspension avec un composé de zirconium hydrosoluble et un composé de plomb hydrosoluble, les composés de zirconium et de plomb en solution étant neutralisés et précipités par ajout de composés alcalins.

21. Procédé selon la revendication 20, **caractérisé en ce que** le mélange obtenu est séparé par filtration pour ensuite éventuellement le laver et sécher, de manière à obtenir un matériau pulvérulent qui est constitué de dioxyde de titane et d'oxydes et/ou hydroxydes précipités de zirconium et de plomb ayant subi une précipitation.

22. Procédé selon une ou plusieurs des revendications 1 à 21, **caractérisé en ce que** le mélange obtenu est soumis soit à un broyage humide réalisé, préférentiellement dans un broyeur à billes, avant le séchage soit à un broyage à sec réalisé après le séchage.

23. Procédé selon l'une des revendications 18 à 20, **caractérisé en ce que** l'on réalise, après le séchage, une calcination ou calcination partielle à une température ne dépassant pas 650 °C, de préférence inférieure à 500 °C, avec une préférence particulière inférieure à 400 °C.

24. Procédé selon la revendication 23, **caractérisé en ce que** la calcination n'est pas mise en oeuvre de manière isotherme mais en maintenant un taux quasiment constant de conversion en titanate de zirconium non-dopé ou dopé ou bien, le cas échéant, en titanate-zirconate de plomb.

25. Procédé selon l'une des revendications précédentes, **caractérisé en ce que** l'on réalise, après la calcination, un frittage à une température ne dépassant pas 1050 °C, de préférence inférieure à 950 °C.

26. Procédé selon l'une des revendications 23 à 25, **caractérisé en ce que** l'on met en oeuvre, lors du broyage réalisé après la calcination, un apport spécifique en énergie ne dépassant pas 80 kWh par tonne de matière solide, de préférence inférieur à 30 kWh par tonne.

27. Procédé selon l'une des revendications 23 à 25, **caractérisé en ce qu'**après la calcination, on procède au traitement ultérieur sans intercaler une étape de broyage.

28. Procédé selon l'une des revendications 23 à 27, **caractérisé en ce que** la calcination et le frittage sont réalisés dans une seule étape prenant la forme d'un « frittage réactif ».

29. Procédé selon la revendication 25, **caractérisé en ce que** le frittage permet d'atteindre une densité relative d'au moins 97 %, préférentiellement d'au moins 98,5 %.

30. Procédé selon l'une des revendications 2, 3 à 17 ou 20 à 29, **caractérisé en ce que** le rapport Zr/Ti précis souhaité est obtenu en mélangeant deux produits de départ homogènes de type hydrate de zircon-titane lesquels présentent un rapport Zr/Ti différent et l'on ajoute également à ce mélange le composé de plomb et les composants dopants.

31. Procédé selon l'une des revendications 2, 3 à 17 ou 20 à 29, **caractérisé en ce que** le rapport Pb/Zr/Ti précis souhaité est obtenu en mélangeant deux produits de départ homogènes de type hydrate de zircon-titane lesquels présentent un rapport Zr/Ti différent ainsi qu'un troisième produit de départ contenant, outre l'hydrate de zircon-titane, de manière supplémentaire le composé de plomb et l'on ajoute également à ce mélange les composants dopants.

32. Procédé selon l'une des revendications 18 à 31, **caractérisé en ce que** la suspension ou solution contient un ou plusieurs autre composants dopants.

33. Préparation, contenant des particules d'hydrate d'oxyde de titane dont la surface BET est supérieure à 200 m$^2$/g et un composé de zirconium, le rapport molaire entre le zircon et le titane étant compris entre 0,25 et 4.

34. Préparation selon la revendication 33, **caractérisée en ce que** le rapport molaire entre le titane et le zirconium est compris entre 0,75 et 0,90.

35. Préparation selon l'une des revendications 33 ou 34, **caractérisée en ce que** la préparation est pulvérulente.

36. Préparation selon la revendication 35, **caractérisée en ce que** le composé de zirconium, s'agissant préférentiellement d'un composé de type oxyde et/ou hydroxyde, est précipité sur les particules d'hydrate d'oxyde de titane pour ensuite soumettre le mélange à un séchage.

37. Préparation selon l'une des revendications 34 à 36, **caractérisée en ce que** la surface BET de la préparation est supérieure à 50 m$^2$/g, de préférence supérieure à 100 m$^2$/g, avec une préférence particulière supérieure à 150 m$^2$/g.

38. Préparation selon l'une des revendications 35 à 37, **caractérisée en ce que** la teneur en chlorure est inférieure à 100 ppm, de préférence inférieure à 30 ppm.

39. Préparation, contenant des particules d'hydrate d'oxyde de titane dont la surface BET est supérieure à 200 m$^2$/g, ainsi qu'un composé de zirconium précipité ou précipité sur un support, ainsi qu'un composé de plomb, le rapport molaire entre Pb, Zr et Ti étant tel que [Zr]/[Ti] = 0,25 à 4, de préférence 1,0 à 1,5, et [Pb]/([Zr]+[Ti]) = 0,95 à 1,05, de préférence 0,95 bis 1,0.

40. Préparation selon la revendication 39, le composé de plomb et/ou de zirconium ayant été déposé sur les particules d'hydrate d'oxyde de titane et le mélange ayant ensuite été séché.

**41.** Titanate de zirconium, pouvant être préparé par un procédé selon l'une ou plusieurs des revendications 1, 3 à 19 ou 22 à 29, sa teneur en chlorure étant inférieure à 10 ppm, et sa teneur en niobium étant comprise entre 10 et 300 ppm, de préférence entre 20 et 50 ppm.

**42.** Zirconate-titanate de plomb, pouvant être préparé par un procédé selon l'une ou plusieurs des revendications 2, 3 à 17 ou 20 à 31, sa teneur en chlorure étant inférieure à 10 ppm, et sa teneur en niobium étant comprise entre 1 et 300 ppm, de préférence entre 10 et 300 ppm.

**43.** Utilisation d'un zirconate-titanate de plomb selon la revendication 42 pour fabriquer un composant microélectronique.

**44.** Procédé de fabrication d'un composant microélectronique, consistant à broyer un zirconate-titanate de plomb selon la revendication 42 pour ensuite le transformer en corps cru par compression puis le soumettre à un frittage.

**45.** Procédé de fabrication d'un composant microélectronique, consistant à broyer un zirconate-titanate de plomb selon la revendication 42 pour ensuite le transformer en feuille puis le soumettre à un frittage.

**46.** Procédé selon l'une des revendications 44 ou 45, **caractérisé en ce que** la transformation en corps cru ou en feuille est réalisée à l'aide d'additifs organiques.

**47.** Composant microélectronique, comprenant un zirconate-titanate de plomb selon la revendication 42.

**48.** Composant microélectronique selon la revendication 47, le zirconate-titanate de plomb se présentant sous forme d'une couche ayant une épaisseur inférieure à 100 pm, de préférence inférieure à 20 pm.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02062724 A2
- JP 1009819 A
- US 20020135971 A

**In der Beschreibung aufgeführte Nicht-Patentliteratur**

- *PATENT ABSTRACTS OF JAPAN,* vol. 013, 182 (C-591)
- **SHIRASAKI ; SHINICHI et al.** Manufacture of modified zirconium powder for dielectric ceramic. *Verfahren zur Herstellung einer Verbindung*
- **M. OLEDZKA et al.** *Chem. Mater,* 2003, vol. 15, 1090-1098
- Chemical Processing of Ceramics. Taylor and Francis, 2005
- **N.S. GEJBHIYE ; P.K. PANDEY ; L. GEORGE ; A. KUMAR ; J. NANOSCI.** *Nanotechnol.,* 2007, vol. 7 (6), 1975-1979
- Industrial Inorganic Pigments. Wiley-VCH, 2005
- **GOTOR et al.** *J.Europ.Cer.Soc.,* 2003, vol. 23, 505-513